(19) **Europäisches Patentamt**
**European Patent Office**
**Office européen des brevets**

(11) **EP 3 979 122 A1**

(12) **EUROPEAN PATENT APPLICATION**
published in accordance with Art. 153(4) EPC

(43) Date of publication:
06.04.2022 Bulletin 2022/14

(51) Int Cl.:
**G06K** /(2006.01)

(21) Application number: **21760041.0**

(22) Date of filing: **22.02.2021**

(86) International application number:
**PCT/CN2021/077297**

(87) International publication number:
**WO 2021/169924 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.02.2020 CN 202010129936**

(71) Applicant: **Shanghai Sensetime Intelligent
Technology Co.,
Ltd.
Shanghai 200233 (CN)**

(72) Inventors:
• **QIU, Feng**
**Shanghai 200233 (CN)**
• **WANG, Min**
**Shanghai 200233 (CN)**
• **LIU, Wentao**
**Shanghai 200233 (CN)**
• **QIAN, Chen**
**Shanghai 200233 (CN)**
• **MA, Lizhuang**
**Shanghai 200233 (CN)**

(74) Representative: **Bandpay & Greuter
30, rue Notre-Dame des Victoires
75002 Paris (FR)**

(54) **BEHAVIOR PREDICTION METHOD AND APPARATUS, GAIT RECOGNITION METHOD AND APPARATUS, ELECTRONIC DEVICE, AND COMPUTER READABLE STORAGE MEDIUM**

(57) Provided are a behavior prediction method and apparatus, a gait recognition method and apparatus, an electronic device, and a computer-readable storage medium. According to the present disclosure, firstly, a plurality of target video clips are acquired, and each of the target video clips includes a target image and N frame images preceding the target image, where N is a positive integer; then, for each of the plurality of target video clips, gait data and target center-of-gravity coordinates of a target object in the target image are determined based on a plurality of two-dimensional keypoint information of the target object in the target video clip; and finally, behavior feature information of the target object within a predetermined period of time is predicted based on the gait data and the target center-of-gravity coordinates of the target object for the plurality of target video clips.

```
┌─────────────────────────────────────────────┐
│ Acquire a plurality of target video clips     │─ S110
└─────────────────────────────────────────────┘
                     │
                     ▼
┌─────────────────────────────────────────────┐
│ Determine gait data and target center-of-     │─ S120
│ gravity coordinates of the target object in    │
│ the target image based on a plurality of 2D    │
│ keypoint information of the target object in    │
│ each target video clip                          │
└─────────────────────────────────────────────┘
                     │
                     ▼
┌─────────────────────────────────────────────┐
│ Predict behavior feature information of the     │─ S130
│ target object within a predetermined period     │
│ of time based on the gait data and the target   │
│ center-of-gravity coordinates                   │
└─────────────────────────────────────────────┘
                     │
                     ▼
┌─────────────────────────────────────────────┐
│ Determine safety feature information of the     │─ S140
│ target object within the predetermined period   │
│ of time and a safety disposal strategy matching │
│ the safety feature information based on the      │
│ behavior feature information                     │
└─────────────────────────────────────────────┘
```

FIG. 1

EP 3 979 122 A1

Description

CROSS-REFERENCE TO RELATED APPLICATIONS

The present disclosure claims priority to Chinese patent application No. 202010129936.X filed on February 28, 2020 and entitled "BEHAVIOR PREDICTION METHODS AND APPARATUSES, AND GAIT RECOGNITION METHODS AND APPARATUSES", which is incorporated herein by reference in its entirety.

TECHNICAL FIELD

The present disclosure relates to the field of computer vision technology, and in particular to a behavior prediction method and apparatus, a gait recognition method and apparatus, an electronic device, and a computer-readable storage medium.

BACKGROUND

Behavior analysis and recognition of an object is a fundamental requirement in the field of artificial intelligence. For behavior analysis and recognition, multi-stage three-dimensional human pose recognition may be generally used, and it is necessary to depend on parameters of a camera that captures a video of the object or limit a camera angle of the camera, etc.

SUMMARY

In a first aspect, there is provided a behavior prediction method including: acquiring a plurality of target video clips, each of which includes a target image and N frame images preceding the target image, where N is a positive integer; for each of the plurality of target video clips, determining gait data and target center-of-gravity coordinates of a target object in the target image based on a plurality of two-dimensional keypoint information of the target object in the target video clip; and predicting behavior feature information of the target object within a predetermined period of time based on the gait data and the target center-of-gravity coordinates of the target object for the plurality of target video clips.

In this aspect, the accuracy of the predicted gait data and target center-of-gravity coordinates can be improved based on the two-dimensional keypoint information of the target object in the target video clip. The accuracy of the predicted behavior feature information can be improved based on the more accurate gait data and target center-of-gravity coordinates, and thus the safety of the target object can be effectively ensured.

In a possible embodiment, the behavior prediction method may further include: determining, based on the behavior feature information, safety feature information of the target object within the predetermined period of time and a safety disposal strategy matching the safety feature information.

In a possible embodiment, determining the gait data of the target object in the target image based on the plurality of two-dimensional keypoint information of the target object in the target video clip, may include: determining a plurality of three-dimensional keypoint information of the target object in the target image based on a plurality of two-dimensional keypoint information of the target object in each frame image of the target video clip; determining, based on the plurality of three-dimensional keypoint information, a moving direction of the target object; and recognizing, based on the plurality of three-dimensional keypoint information and the moving direction, the gait data of the target object in the target image.

In this embodiment, the three-dimensional keypoint information of the target object in the last frame image of the video clip is determined by using the plurality of two-dimensional keypoint information of the target object in each frame image of the video clip, which can avoid an ill-posed problem in each three-dimensional keypoint information determined, and thus the success rate and accuracy rate of gait analysis and recognition based on the three-dimensional keypoint information can be improved. In addition, after the plurality of three-dimensional keypoint information of the target object is determined, the moving direction of the target object is determined by using the three-dimensional keypoint information, and the gait data of the target object is determined based on the determined moving direction and three-dimensional keypoint information. The gait analysis and recognition of the target object may be performed without dependence on camera parameters of a camera used to capture the video clip, which overcomes the defects of strong dependence on other data or devices and poor generalization ability in the gait analysis and recognition.

In a possible embodiment, determining the target center-of-gravity coordinates of the target object in the target image based on the plurality of two-dimensional keypoint information of the target object in the target video clip, may include: determining first center-of-gravity coordinates of the target object and a plurality of three-dimensional keypoint information of the target object in the target image based on a plurality of two-dimensional keypoint information of the target object in each frame image of the target video clip; determining second center-of-gravity coordinates of the target object based on a plurality of two-dimensional keypoint information of the target object in the target image and the plurality of three-dimensional keypoint information; and determining the target center-of-gravity coordinates of the target object in the target image based on the first center-of-gravity coordinates and the second center-of-gravity coordinates.

In this embodiment, the final target center-of-gravity coordinates of the target object can be determined more accurately by using the determined first and second center-of-gravity coordinates in combination.

In a possible embodiment, determining the plurality of three-dimensional keypoint information of the target object in the target image, may include: for each frame image in the target video clip, determining a detection box of the target object in the frame image based on a plurality of two-dimensional keypoint information of the target object in the frame image, and normalizing coordinate information in each of the plurality of two-dimensional keypoint information in the frame image based on size information of the detection box and coordinates of a center point of the detection box to obtain a plurality of target two-dimensional keypoint information of the target object in the frame image; and determining the plurality of three-dimensional keypoint information of the target object in the target image based on the plurality of target two-dimensional keypoint information of the target object in each frame image in the target video clip.

In this embodiment, the detection box of the target object is firstly determined by using the two-dimensional keypoint information of the target object in the image, and then the coordinate information in the two-dimensional keypoint information is normalized by using the size information and the coordinates of the center point of the detection box, which gets rid of dependence on the camera parameters of the camera capturing the video clip or size information of an original image, and thus has good versatility for cropped images.

In a possible embodiment, determining the plurality of three-dimensional keypoint information of the target object in the target image based on the plurality of target two-dimensional keypoint information of the target object in each frame image in the target video clip, may include: inputting the plurality of target two-dimensional keypoint information of the target object in the frame image into a trained first neural network; and processing the plurality of target two-dimensional keypoint information through the trained first neural network, to determine the plurality of three-dimensional keypoint information of the target object in the target image.

In this embodiment, the three-dimensional keypoint information is determined through the trained neural network, which can improve the automation of information processing and determination, and improve the accuracy of information processing and determination.

In a possible embodiment, the behavior prediction method may further include training a first neural network to obtain the trained first neural network by acquiring a first sample video clip including a first sample image, and acquiring a plurality of standard three-dimensional keypoint information of a first sample object in the first sample image, where the first sample video clip further includes N sample frame images preceding the first sample image; determining a plurality of sample two-dimensional keypoint information of the first sample object in each frame image of the first sample video clip based on the plurality of standard three-dimensional keypoint information; inputting the plurality of sample two-dimensional keypoint information of the first sample object into the first initial neural network, and processing the plurality of sample two-dimensional keypoint information through the first initial neural network, to determine a plurality of predicted three-dimensional keypoint information of the first sample object in the first sample image; adjusting network parameters of the first initial neural network based on error information between the plurality of predicted three-dimensional keypoint information and the plurality of standard three-dimensional keypoint information; and obtaining the first neural network after the training of the first initial neural network is completed.

In this embodiment, the plurality of sample two-dimensional keypoint information is determined based on the plurality of standard three-dimensional keypoint information with back-projection, which can improve the accuracy of the determined sample two-dimensional keypoint information.

In a possible embodiment, determining the plurality of sample two-dimensional keypoint information of the first sample object in each frame image of the first sample video clip, may include: acquiring device parameter information of a capturing device capturing the first sample video clip, and an RGB picture of the frame image of the first sample video clip; and determining the plurality of sample two-dimensional keypoint information of the first sample object in the frame image of the first sample video clip based on the device parameter information, the RGB picture of the frame image, and the plurality of standard three-dimensional keypoint information.

In this embodiment, the device parameter information of the capturing device is combined with the plurality of standard three-dimensional keypoint information, which can determine the plurality of sample two-dimensional keypoint information more accurately.

In a possible embodiment, adjusting the network parameters of the first initial neural network based on the error information between the plurality of predicted three-dimensional keypoint information and the plurality of standard three-dimensional keypoint information, may include: acquiring physical size information of the first sample object; determining, based on the physical size information of the first sample object, target standard three-dimensional keypoint information for each of the plurality of standard three-dimensional keypoint information in a network scale space; and adjusting the network parameters of the first initial neural network based on error information between the plurality of predicted three-dimensional keypoint information and a plurality of target standard three-dimensional keypoint information corresponding to the plurality of standard three-dimensional keypoint information.

In this embodiment, the standard three-dimensional keypoint information in a physical scale space is converted into the target standard three-dimensional keypoint information in the network scale space by using the physical size information of the sample object, and the neural network is trained based on the target standard three-dimensional keypoint information in the network scale space. The trained neural network can determine the three-dimensional keypoint information in the network scale space, which can overcome an influence of the size of the target object on determining the three-dimensional keypoint information, and improve the accuracy of gait recognition.

In a possible embodiment, determining, based on the plurality of three-dimensional keypoint information, the moving direction of the target object, may include: determining, based on the plurality of three-dimensional keypoint information, a first line connected between a left hip and a right hip of the target object, and a second line connected between a left shoulder and a right shoulder of the target object; determining a minimum error plane between the first line and the second line; and determining the moving direction of the target object based on an intersection line between the minimum error plane and a horizontal plane, or determining, based on the plurality of three-dimensional keypoint information, a third line connected between the left hip and the right hip of the target object, a fourth line connected between the left shoulder and the right shoulder of the target object, and a fifth line connected between a pelvic point and a cervical point of the target object, where the third line is the first line and the fourth line is the second line; determining a first torso direction of the target object relative to the horizontal plane based on the third line and the fourth line; determining a second torso direction of the target object relative to a vertical plane based on the fifth line; and determining the moving direction of the target object based on the first torso direction and the second torso direction.

In this embodiment, the first line, the second line, and the minimum error plane between the first line and the second line are determined only using the three-dimensional keypoint information, and then the moving direction of the target object is determined using the intersection line between the minimum error plane and the horizontal plane. The moving direction is not determined based on device parameters of the capturing device, thus the gait analysis and recognition are not based on the device parameters of the capturing device, which overcomes the defects of strong dependence on other data or devices and poor generalization ability in the gait analysis and recognition.

In addition, in this embodiment, a plurality of lines are determined only using the three-dimensional keypoint information, then the first torso direction of the target object relative to the horizontal plane and the second torso direction of the target object relative to the vertical plane are determined using the determined lines, and finally the moving direction of the target object is determined using the first torso direction and the second torso direction. The moving direction is not determined based on the device parameters of the capturing device, thus the gait analysis and recognition are not based on the device parameters of the capturing device, which overcomes the defects of strong dependence on other data or devices and poor generalization ability in the gait analysis and recognition.

In a possible embodiment, the gait data may include gait-length information of the target object, and recognizing, based on the plurality of three-dimensional keypoint information and the moving direction, the gait data of the target object in the target image, may include: determining, based on the plurality of three-dimensional keypoint information, a first projection of a line connected between two feet of the target object in the moving direction; and determining the gait-length information of the target object based on length information of the first projection, and/or the gait data may include gait-width information of the target object, and recognizing, based on the plurality of three-dimensional keypoint information and the moving direction, the gait data of the target object in the target image, may include: determining, based on the plurality of three-dimensional keypoint information, a second projection of the line connected between the two feet of the target object in a direction perpendicular to the moving direction; and determining the gait-width information of the target object based on length information of the second projection.

In the above two embodiments, the gait-length information and the gait-width information of the target object are determined only by using the line connected between the two feet of the target object determined by the three-dimensional keypoint information and the moving direction of the target object determined by the three-dimensional keypoint information, without dependence on the device parameters of the capturing device, which overcomes the defects of strong dependence on other data or devices and poor generalization ability in the gait analysis and recognition.

In a possible embodiment, determining the first center-of-gravity coordinates of the target object based on the plurality of two-dimensional keypoint information of the target object in each frame image of the target video clip, may include: inputting the plurality of two-dimensional keypoint information of the target object in each frame image of the target video clip into a trained second neural network; and processing the plurality of two-dimensional keypoint information through the trained second neural network, to determine the first center-of-gravity coordinates of the target object.

In this embodiment, the center-of-gravity coordinates are determined through the trained neural network, which can improve the automation of information processing and determination, and improve the accuracy of information processing and determination.

In a possible embodiment, the behavior prediction method may further include training a second neural network to obtain the trained second neural network by acquiring a second sample video clip including a second sample image, and acquiring a plurality of standard three-dimensional keypoint information of a second sample object in the second sample image, where the second sample video clip further includes N sample frame images preceding the second sample image; determining a plurality of sample two-dimensional keypoint information of the second sample object in each frame image of the second sample video clip based on the plurality of standard three-dimensional keypoint information; determining standard center-of-gravity coordinates of the second sample object based on the plurality of standard three-dimensional keypoint information; inputting the plurality of sample two-dimensional keypoint information of the second sample object into the second initial neural network, and processing the plurality of sample two-dimensional keypoint information through the second initial neural network, to output predicted center-of-gravity coordinates of the second sample object in the second sample image; adjusting network parameters of the second initial neural network based on error information between the predicted center-of-gravity coordinates and the standard center-of-gravity coordinates; and obtaining the second neural network after the training of the second initial neural network is completed.

In this embodiment, the plurality of sample two-dimensional keypoint information is determined based on the plurality of standard three-dimensional keypoint information with back-projection, which can improve the accuracy of the determined sample two-dimensional keypoint information.

In a second aspect, there is provided a gait recognition method including: acquiring a plurality of target video clips, each of which includes a target image and N frame images preceding the target image, where N is a positive integer; for each of the plurality of target video clips, determining a plurality of three-dimensional keypoint information of a target object in the target image based on a plurality of two-dimensional keypoint information of the target object in the target video clip; determining a moving direction of the target object based on the plurality of three-dimensional keypoint information of the target object; and recognizing gait data of the target object in the target image based on the plurality of three-dimensional keypoint information and the moving direction.

In a possible embodiment, in the case that the plurality of three-dimensional keypoint information includes three-dimensional keypoint information in a network scale space, before determining the moving direction of the target object based on the plurality of three-dimensional keypoint information, the gait recognition method may further include: acquiring physical size information of the target object; and updating the three-dimensional keypoint information in the network scale space to three-dimensional keypoint information in a physical scale space based on the physical size information of the target object.

In this embodiment, in order to accurately determine the gait data of the target object in the physical scale space, the three-dimensional keypoint information in the network scale space is updated to the three-dimensional keypoint information in the physical scale space after the three-dimensional keypoint information in the network scale space is determined.

In a possible embodiment, determining the moving direction of the target object based on the plurality of three-dimensional keypoint information, may include: determining, based on the plurality of three-dimensional keypoint information, a first line connected between a left hip and a right hip of the target object, and a second line connected between a left shoulder and a right shoulder of the target object; determining a minimum error plane between the first line and the second line; and determining the moving direction of the target object based on an intersection line between the minimum error plane and a horizontal plane, or determining, based on the plurality of three-dimensional keypoint information, a third line connected between the left hip and the right hip of the target object, a fourth line connected between the left shoulder and the right shoulder of the target object, and a fifth line connected between a pelvic point and a cervical point of the target object; determining a first torso direction of the target object relative to the horizontal plane based on the third line and the fourth line; determining a second torso direction of the target object relative to a vertical plane based on the fifth line; and determining the moving direction of the target object based on the first torso direction and the second torso direction.

In a possible embodiment, the gait data may include gait-length information of the target object, and recognizing, based on the plurality of three-dimensional keypoint information and the moving direction, the gait data of the target object in the target image, may include: determining, based on the plurality of three-dimensional keypoint information, a first projection of a line connected between two feet of the target object in the moving direction; and determining the gait-length information of the target object based on length information of the first projection, and/or the gait data may include gait-width information of the target object, and recognizing, based on the plurality of three-dimensional keypoint information and the moving direction, the gait data of the target object in the target image, may include: determining, based on the plurality of three-dimensional keypoint information, a second projection of the line connected between the two feet of the target object in a direction perpendicular to the moving direction; and determining the gait-width information of the target object based on length information of the second projection.

In a third aspect, there is provided a gait recognition apparatus including:

a video acquiring module, configured to acquire a plurality of target video clips, each of which includes a target image and N frame images preceding the target image, where N is a positive integer; a keypoint processing module, configured to for each of the plurality of target video clips, determine a plurality of three-dimensional keypoint information of a target object in the target image based on a plurality of two-dimensional keypoint information of the target object in the target video clip;
a moving direction determining module, configured to determine a moving direction of the target object based on the plurality of three-dimensional keypoint information of the target object; and
a gait recognition module, configured to recognize gait data of the target object in the target image based on the plurality of three-dimensional keypoint information and the moving direction.

In a fourth aspect, there is provided a behavior prediction apparatus including:

an image acquiring module, configured to acquire a plurality of target video clips, each of which includes a target image and N frame images preceding the target image, where N is a positive integer;
an image processing module, configured to for each of the plurality of target video clips, determine gait data and target center-of-gravity coordinates of a target object in the target image based on a plurality of two-dimensional keypoint information of the target object in the target video clip; and
a prediction module, configured to predict behavior feature information of the target object within a predetermined period of time based on the gait data and the target center-of-gravity coordinates of the target object for the plurality of target video clips.

In a fifth aspect, there is provided an electronic device including a processor, a memory, and a bus. The memory is configured to store machine-readable instructions executable by the processor. When the electronic device is running, the processor communicates with the memory via the bus. The machine-readable instructions, when executed by the processor, cause the processor to perform the above gait recognition method or behavior prediction method.

In a sixth aspect, there is provided a computer-readable storage medium in which a computer program is stored. The computer program, when executed by a processor, causes the processor to perform the above gait recognition method or behavior prediction method.

The above apparatuses, electronic device, and computer-readable storage medium according to the present disclosure include at least technical features that are substantially the same as or similar to the technical features in any aspect or any embodiment in any aspect of the above methods of the present disclosure. Therefore, for the effects of the above apparatuses, electronic device, and computer-readable storage medium, reference may be made to the effects described in the above methods, which will not be repeated herein.

**BRIEF DESCRIPTION OF THE DRAWINGS**

In order to explain embodiments of the present disclosure more clearly, the drawings to be used in the embodiments will be briefly introduced below. It should be understood that the following drawings merely illustrate some embodiments of the present disclosure, and thus should not be regarded as limiting the scope. For those ordinary skilled in the art, other relevant drawings may be obtained from these drawings without any creative efforts.

FIG. 1 illustrates a flowchart of a behavior prediction method according to an embodiment of the present disclosure.
FIG. 2 illustrates a flowchart of a behavior prediction method according to another embodiment of the present disclosure when determining a plurality of three-dimensional keypoint information of a target object in a target image.
FIG. 3 illustrates a schematic diagram of a detection box in a behavior prediction method according to yet another embodiment of the present disclosure.
FIG. 4 illustrates a schematic diagram of a behavior prediction method according to still another embodiment of the present disclosure when determining a moving direction.
FIG. 5 illustrates a flowchart of a center-of-gravity prediction method according to an embodiment of the present disclosure.
FIG. 6A illustrates a schematic structural diagram of a temporal dilated convolutional neural network in the related art.
FIG. 6B illustrates a schematic structural diagram of a simplified temporal dilated convolutional neural network.
FIG. 7 illustrates a flowchart of a gait recognition method according to an embodiment of the present disclosure.
FIG. 8 illustrates a schematic structural diagram of a behavior prediction apparatus according to an embodiment of the present disclosure.
FIG. 9 illustrates a schematic structural diagram of a gait recognition apparatus according to an embodiment of the present disclosure.
FIG. 10 illustrates a schematic structural diagram of an electronic device according to an embodiment of the present disclosure.

**DETAILED DESCRIPTION OF THE EMBODIMENTS**

In order to make objectives, features and advantages of embodiments of the present disclosure more clear, the embodiments of the present disclosure will be clearly and completely described below in conjunction with the accompanying drawings. It should be understood that the accompanying drawings in the present disclosure are merely for the purpose of illustration and description, and are not intended to limit the protection scope of the present disclosure. In addition, it should be understood that the schematic drawings are not drawn to scale. Flowcharts used in the present disclosure illustrate operations implemented according to some embodiments of the present disclosure. It should be understood that the operations in the flowcharts may be implemented out of order, and steps without logical context may be reversed in order or implemented at the same time. In addition, those skilled in the art may add one or more other operations to the flowcharts or remove one or more operations from the flowcharts under the guidance of the present disclosure.

In addition, the described embodiments are merely some of the embodiments of the present disclosure, rather than all of the embodiments. Components of the embodiments of the present disclosure generally described and illustrated in the drawings herein may be arranged and designed in various different configurations. Therefore, the following detailed description of the embodiments of the present disclosure provided in the drawings is not intended to limit the scope of the claimed disclosure, but merely represents specific embodiments of the present disclosure. Based on the embodiments of the present disclosure, all other embodiments obtained by those skilled in the art without any creative efforts shall fall within the protection scope of the present disclosure.

It should be noted that the term "include" will be used in the embodiments of the present disclosure to indicate the presence of the features stated thereafter, but not exclude the addition of other features.

As mentioned above, for behavior analysis and recognition, multi-stage three-dimensional human pose recognition may be generally used, and it is necessary to depend on parameters of a camera that captures a video of an object or limit a camera angle of the camera, etc. This behavior analysis and recognition method may have low recognition accuracy and success rate, and is more restrictive and less generalizable.

The present disclosure provides a behavior prediction method and apparatus. According to the present disclosure, the accuracy of predicted gait data and target center-of-gravity coordinates can be improved based on two-dimensional (2D) keypoint information of a target object in a video clip. The accuracy of predicted behavior feature information can be improved based on more accurate gait data and target center-of-gravity coordinates, and thus the safety of the target object can be effectively ensured.

The present disclosure further provides a gait recognition method and apparatus. According to the present disclosure, three-dimensional (3D) keypoint information of the target object in the last frame image of the video clip is determined by using a plurality of 2D keypoint information of the target object in the video clip, which can avoid an ill-posed problem in the determined 3D keypoint information, and thus the success rate and accuracy rate of gait analysis and recognition based on the 3D keypoint information can be improved. In addition, according to the present disclosure, a moving direction of the target object is determined by using the 3D keypoint information, and gait data of the target object is determined based on the determined moving direction and 3D keypoint information. The gait analysis and recognition of the target object may be performed without dependence on camera parameters of a camera used to capture the video clip, which overcomes the defects of strong dependence on other data or devices and poor generalization ability in the gait analysis and recognition.

The behavior prediction method and apparatus, gait recognition method and apparatus, electronic device, and computer-readable storage medium according to the present disclosure will be described below in specific embodiments.

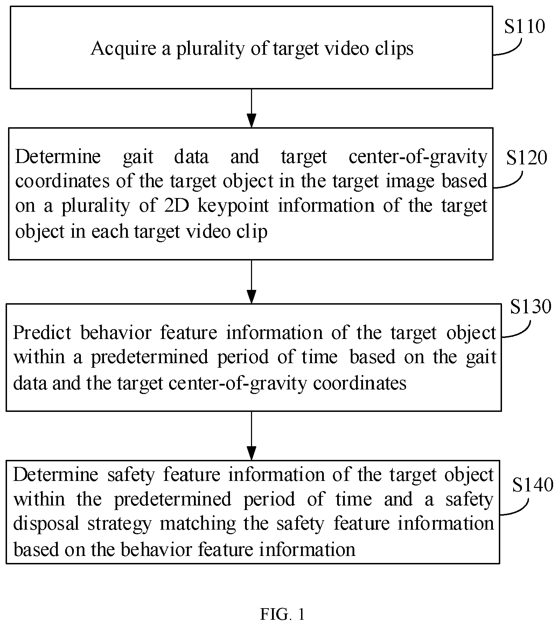

An embodiment of the present disclosure provides a behavior prediction method, which is applied to a terminal device or server that performs behavior prediction on a target object. As shown in FIG. 1, the behavior prediction method according to the embodiment of the present disclosure includes steps S110-S140.

At step S110, a plurality of target video clips are acquired, and each of the target video clips includes a target image and N frame images preceding the target image, where N is a positive integer.

Herein, the target image, which may be the last frame image in the target video clip, is an image to be used for behavior prediction. With this embodiment, behavior feature information, safety feature information, and the like of the target object in the target image may be determined.

The target video clip may be captured by the terminal device that performs the behavior prediction using its own capturing device such as a camera, or may be captured by other capturing devices and then transmitted to the terminal device or server that performs the behavior prediction.

At step S120, gait data and target center-of-gravity coordinates of the target object in the target image are determined based on a plurality of 2D keypoint information of the target object in each target video clip.

Herein, a plurality of 3D keypoint information of the target object in the target image may be firstly predicted by using a plurality of 2D keypoint information of the target object in each frame image of the target video clip, and then the gait data of the target object in the target image may be determined by using the plurality of 3D keypoint information of the target object in the target image. The target center-of-gravity coordinates of the target object in the target image may be determined by using the plurality of 2D keypoint information of the target object in each frame image of the target video clip and the plurality of 3D keypoint information of the target object in the target image.

In some embodiments, the gait data may include gait-length information and/or gait-width information of the target object.

At step S130, behavior feature information of the target object within a predetermined period of time is predicted based on the gait data and the target center-of-gravity coordinates.

Herein, a target video may include a plurality of target video clips, each of which includes a target image. By determining the gait data and the target center-of-gravity coordinates of the target object in the target image of each target video clip, the gait data and the target center-of-gravity coordinates of the target object at multiple consecutive time points may be obtained. After obtaining the gait data of the target object at the multiple consecutive time points, behavior of the target object within the predetermined period of time may be monitored and predicted based on the obtained gait data. After obtaining the target center-of-gravity coordinates of the target object at the multiple consecutive time points, a movement trajectory of the target object within the predetermined period of time may be predicted. The behavior feature information of the target object within the predetermined period of time may be determined by using the predicted behavior and movement trajectory of the target object in combination.

In some embodiments, the behavior feature information may include a trajectory feature and a behavior feature of the target object within the predetermined period of time. For example, the behavior feature information may include coordinates of the movement trajectory of the target object within the predetermined period of time, a gait-length and a gait-width during movement of the target object within the predetermined period of time, etc.

In some embodiments, the obtained gait data and target center-of-gravity coordinates may be used to remotely monitor and predict the behavior and movement trajectory of children or the elderly with cognitive impairment to ensure the personal safety of the children or the elderly with cognitive impairment. In addition, by using the currently predicted behavior and movement trajectory of the children or the elderly with cognitive impairment in combination, behavior feature information of the next behavior of the children or the elderly with cognitive impairment may be predicted, which may indicate or be used to determine whether the next behavior of the children or the elderly with cognitive impairment will be dangerous, so as to implement a matching safety disposal strategy.

At step S140, safety feature information of the target object within the predetermined period of time and a safety disposal strategy matching the safety feature information are determined based on the behavior feature information.

The safety feature information may be used to indicate whether the movement of the target object within the predetermined period of time will cause danger and what kind of danger will occur, etc. For example, the safety feature information may indicate that the target object is moving at an excessive stride, will collide with other objects, will fall, and other dangerous conditions within the predetermined period of time.

The safety disposal strategy may be predetermined and have a mapping relationship with the safety feature information. Based on the mapping relationship and the determined safety feature information, the safety disposal strategy to be implemented for the target object may be determined. The safety disposal strategy may include sending an alert to the target object or a guardian of the target object. For example, in the case where the target object may fall due to an excessive stride, a fall-prevention alert may be sent to the target object or the guardian of the target object; and in the case where the target object may collide, a collisionprevention alert may be sent to the target object or the guardian of the target object.

In this embodiment, the accuracy of the predicted gait data and target center-of-gravity coordinates can be improved based on the 2D keypoint information of the target object in the target video clip. The accuracy of the predicted behavior feature information can be improved based on the more accurate gait data and target center-of-gravity coordinates, and thus the safety of the target object can be effectively ensured.

In some embodiments, the determination of the gait data of the target object in the target image may include the following steps I-III.

At step I, a plurality of 3D keypoint information of the target object in the target image is determined based on a plurality of 2D keypoint information of the target object in each frame image of the target video clip.

Prior to step I, the plurality of 2D keypoint information of the target object in each frame image of the target video clip may be firstly determined. In an implementation, a 2D keypoint detection network may be used to detect each frame image to determine the plurality of 2D keypoint information in each frame image.

After the plurality of 2D keypoint information of the target object in each frame image is determined, the plurality of 3D keypoint information of the target object in the target image may be determined by using a temporal dilated convolutional neural network based on the plurality of determined 2D keypoint information, for example.

The 3D keypoint information of the target object in the target image, i.e., in the last frame image of the target video clip, is determined by using the plurality of 2D keypoint information of the target object in each frame image of the target video clip, which can avoid an ill-posed problem that may occur when determining the 3D keypoint information by using 2D keypoint information of a single frame image, and can achieve better temporal coherence and stability of the predicted 3D keypoint information, and thus the success rate and accuracy rate of gait analysis and recognition based on the 3D keypoint information can be improved.

At step II, a moving direction of the target object is determined based on the plurality of 3D keypoint information.

In some embodiments, the moving direction of the target object may be determined by using those of the 3D keypoint information corresponding to hips, shoulders, pelvis, cervical vertebra, and the like of the target object, without dependence on device parameters of a capturing device capturing the target video clip.

The moving direction is a moving direction of the target object in a physical scale space. The 3D keypoint information may be information of the target object both in a network scale space and in the physical scale space. If the 3D keypoint information is the information of the target object in the network scale space, the 3D keypoint information in the network scale space may be firstly converted into the information in the physical scale space.

The physical scale space may have the physical scale in the real world, and the unit may be the standard unit of length "meter" in the International System of Units. The network scale space may have an artificially defined arithmetic scale in the unit of 1, which aims to eliminate an influence of the object's own size on relevant calculations and simplify the calculations. The two scales have different dimensions.

At step III, the gait data of the target object in the target image is recognized based on the plurality of 3D keypoint information and the moving direction.

After the moving direction of the target object is determined, the gait data of the target object may be determined by using those of the 3D keypoint information corresponding to feet of the target object.

Herein, the gait data may include gait-length information and/or gait-width information of the target object.

In an implementation, determining the gait-length information of the target object in the target image may include:

determining, based on the plurality of 3D keypoint information, a first projection of a line connected between two feet of the target object in the moving direction; and determining the gait-length information of the target object based on length information of the first projection.

In an implementation, determining the gait-width information of the target object in the target image may include: determining, based on the plurality of 3D keypoint information, a second projection of the line connected between the two feet of the target object in a direction perpendicular to the moving direction; and determining the gait-width information of the target object based on length information of the second projection.

As described above, the line connected between the two feet may be projected in the moving direction of the target object and the direction perpendicular to the moving direction, respectively, and then the gait-length information and the gait-width information of the target object may be determined based on lengths of the respective projections. In the case that the 3D keypoint information is the information in the physical scale space, the length information of the first projection and the length information of the second projection may be directly used as the gait-length information and the gait-width information of the target object, respectively. In addition, in the case that the 3D keypoint information is not the information in the physical scale space, the length information of the first projection and the length information of the second projection may be respectively converted into information in the physical scale space after obtaining the first projection and the second projection, and the length information of the first projection and the length information of the second projection in the physical scale space may be used as the gait-length information and the gait-width information, respectively. During space conversion, the directly determined length information of the first projection may be multiplied by a predetermined ratio for the spatial conversion to obtain the converted gait-length information in the physical scale space, and the directly determined length information of the second projection may be multiplied by the predetermined ratio for the spatial conversion to obtain the converted gait-width information in the physical scale space.

As above, the gait-length information and the gait-width information of the target object may be determined only by using the line connected between the two feet of the target object determined by the 3D keypoint information and the moving direction of the target object determined by the 3D keypoint information, without dependence on the device parameters of the capturing device, which overcomes the defects of strong dependence on other data or devices and poor generalization ability in the gait analysis and recognition.

In this embodiment, after the plurality of 3D keypoint information of the target object is determined, the moving direction of the target object may be determined by using the 3D keypoint information, and the gait data of the target object may be determined based on the determined moving direction and 3D keypoint information. The gait analysis and recognition of the target object may be performed without dependence on camera parameters of a camera used to capture the video clip, which overcomes the defects of strong dependence on other data or devices and poor generalization ability in the gait analysis and recognition.

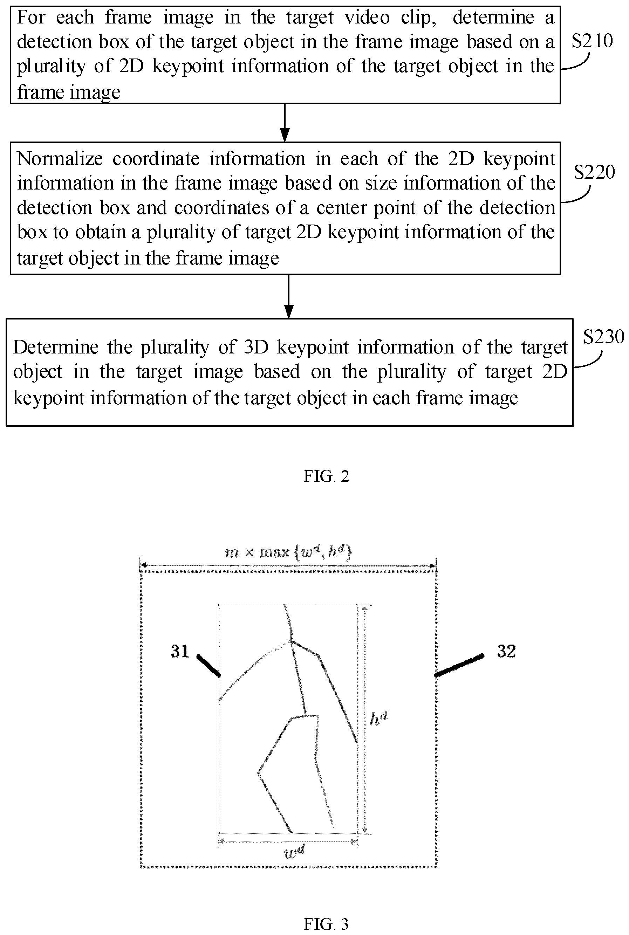

In some embodiments, as shown in FIG. 2, determining the plurality of 3D keypoint information of the target object in the target image based on the plurality of 2D keypoint information of the target object in each frame image of the target video clip may include steps S210-S230.

At step S210, for each frame image in the target video clip, a detection box of the target object in the frame image is determined based on a plurality of 2D keypoint information of the target object in the frame image.

Herein, the plurality of 2D keypoint information of the target object in each frame image may be firstly determined by using the 2D keypoint detection network.

Based on keypoint coordinates in the plurality of 2D keypoint information, a detection box enclosing the target object may be determined, such as the detection box 31 in FIG. 3, where $w^d$ denotes a width of the detection box, and $h^d$ denotes a height of the detection box.

At step S220, coordinate information in each of the 2D keypoint information in the frame image is normalized based on size information of the detection box and coordinates of a center point of the detection box to obtain a plurality of target 2D keypoint information of the target object in the frame image.

During the normalization process, a larger square box 32 may be determined based on the size information of the detection box, i.e., the width and height of the detection box, and then the determined square box 32 may be used for normalization. The square box 32 has a side length of m X max {w$^d$, h$^d$} , where a value of m is determined according to actual application scenarios, and may be, for example, 1.2. The center of the square box 32 coincides with the center of the detection box 31.

In an implementation, the following equation may be used for normalization:

$$K_{x,y} = \frac{\vec{K}_{[x,y]} - [c_x^d, c_y^d]}{2 \times m \times \max\{w^d, h^d\}}$$

Where $K_{x,y}$ denotes the normalized 2D keypoint information, that is, coordinates in the target 2D keypoint information. $\vec{K}_{[x,y]}$ denotes coordinates in the 2D keypoint information. $c_x^d$ , $c_y^d$ denotes the coordinates of the center point of the detection box.

At step S230, the plurality of 3D keypoint information of the target object in the target image is determined based on the plurality of target 2D keypoint information of the target object in each frame image.

In this embodiment, the detection box of the target object may be firstly determined by using the 2D keypoint information of the target object in the image, and then the coordinate information in the 2D keypoint information may be normalized by using the size information and the coordinates of the center point of the detection box, which gets rid of dependence on the camera parameters of the camera capturing the video clip or size information of an original image, and thus has good versatility for cropped images.

As above, after the 2D keypoint information is normalized, the normalized 2D keypoint information may be input into a trained first neural network such as a trained temporal dilated convolutional neural network, to determine the 3D keypoint information.

The 3D keypoint information is determined through the trained first neural network, which can improve the automation of information processing and determination, and improve the accuracy of information processing and determination.

In an implementation, training the first neural network may include the following steps I-IV.

At step I, a first sample video clip including a first sample image, and a plurality of standard 3D keypoint information of a first sample object in the first sample image are acquired, where the first sample video clip further includes N sample frame images preceding the first sample image.

Herein, the first sample image is an image to be used for gait recognition. The standard 3D keypoint information may be used as sample labelling information.

In an implementation, the plurality of standard 3D keypoint information of the first sample object in the first sample image may be determined through the neural network. The plurality of standard 3D keypoint information may be, for example, an object skeleton including information of seventeen keypoints.

At step II, a plurality of sample 2D keypoint information of the first sample object in each frame image of the first sample video clip is determined based on the plurality of standard 3D keypoint information.

Herein, the sample 2D keypoint information may be obtained by back-projection of the standard 3D keypoint information, which may include, for example:

acquiring device parameter information of a capturing device capturing the first sample video clip, and an RGB picture of each frame image of the first sample video clip; and determining the plurality of sample 2D keypoint information of the first sample object in each frame image of the first sample video clip based on the device parameter information, the RGB picture of each frame image, and the plurality of standard 3D keypoint information.

The plurality of sample 2D keypoint information is determined based on the plurality of standard 3D keypoint information with back-projection, which can improve the accuracy of the determined sample 2D keypoint information.

In addition, in an implementation, the sample 2D keypoint information may be obtained without the use of back-projection. For example, the 2D keypoint detection network may be directly used to detect the first sample object in each frame image to obtain the plurality of sample 2D keypoint information of the first sample object in each frame image of the first sample video clip.

After obtaining the sample 2D keypoint information and before training a first initial neural network with the sample 2D keypoint information, coordinate information in the sample 2D keypoint information may be normalized. The normalization method is the same as that of normalizing the coordinate information in the 2D keypoint information in the above embodiment, which may include: for each frame image in the first sample video clip, determining a sample detection box of the first sample object in the frame image based on a plurality of sample 2D keypoint information of the first sample object in the frame image; and normalizing coordinate information in each of the sample 2D keypoint information in the frame image based on size information of the sample detection box and coordinates of a center point of the sample detection box.

At step III, the plurality of sample 2D keypoint information is input into the first initial neural network to be trained, and the plurality of input sample 2D keypoint information is processed through the first initial neural network, to determine a plurality of predicted 3D keypoint information of the first sample object in the first sample image.

At step IV, network parameters of the first initial neural network are adjusted based on error information between the plurality of predicted 3D keypoint information and the plurality of standard 3D keypoint information, and the first neural network is obtained after the training is completed.

The plurality of standard 3D keypoint information in the above step I is information in the physical scale space. After acquiring the standard 3D keypoint information in the physical scale space, the network parameters of the first initial neural network may be adjusted directly by using the error information between the standard 3D keypoint information in the physical scale space and the plurality of predicted 3D keypoint information. In this way, the 3D keypoint information directly predicted by the trained first neural network when in use is the information in the physical scale space. Thus, when determining the gait data of the target object using the predicted 3D keypoint information, there is no need for conversion to the physical scale space.

However, the standard 3D keypoint information in the physical scale space in the step I may be converted into information in the network scale space, and then the network parameters of the first initial neural network may be adjusted by using the error information between the standard 3D keypoint information in the network scale space and the plurality of predicted 3D keypoint information. In this way, the 3D keypoint information directly predicted by the trained first neural network when in use is the information in the network scale space. Thus, when determining the gait data of the target object using the predicted 3D keypoint information, the 3D keypoint information in the network scale space may be converted into the 3D keypoint information in the physical scale space.

In an implementation, converting the plurality of standard 3D keypoint information in the physical scale space into the information in the network scale space may include: acquiring physical size information of the first sample object; and respectively converting the plurality of standard 3D keypoint information in the physical scale space into the information in the network scale space based on the physical size information of the first sample object.

After acquiring the physical size information of the first sample object, coordinate information in the standard 3D keypoint information in the physical scale space may be divided by the physical size information to obtain the converted information in the network scale space of the standard 3D keypoint information in the physical scale space.

In some embodiments, the physical size information may include height information, or the like of the first sample object (for example, a person).

As above, the standard 3D keypoint information in the physical scale space is converted into the information in the network scale space by using the physical size information of the sample object, and the neural network trained based on the information in the network scale space may determine the 3D keypoint information in the network scale space, which can eliminate the scale diversity, overcome an influence of a size of the target object on determining the 3D keypoint information, and improve the accuracy of gait recognition.

If the 3D keypoint information predicted by the first neural network is the information in the network scale space, then before using the predicted 3D keypoint information for gait analysis, that is, determining the moving direction and the gait data, the 3D keypoint information in the network scale space may be converted into the information in the physical scale space, which may include:

acquiring physical size information of the target object; and updating the 3D keypoint information in the network scale space to the 3D keypoint information in the physical scale space based on the physical size information of the target object.

After acquiring the physical size information of the target object, coordinate information in the 3D keypoint information in the network scale space may be multiplied by the physical size information to obtain the converted information in the physical scale space of the 3D keypoint information in the network scale space.

In some embodiments, the physical size information may include height information, or the like of the target object (for example, a person).

In some embodiments, determining, based on the plurality of 3D keypoint information, the moving direction of the target object, may include:

determining, based on the plurality of 3D keypoint information, a first line connected between a left hip and a right hip of the target object, and a second line connected between a left shoulder and a right shoulder of the target object; determining a minimum error plane between the first line and the second line; and determining the moving direction of the target object based on an intersection line between the minimum error plane and a horizontal plane.

The 3D keypoint information used to determine the first line and the second line is the 3D keypoint information in the physical scale space.

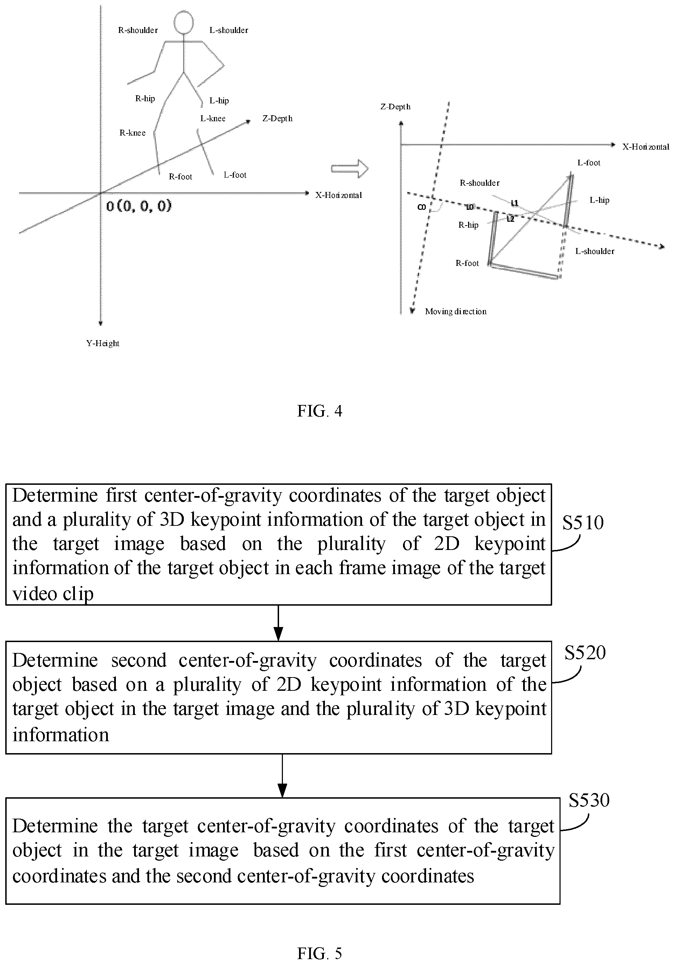

As shown in FIG. 4, in an implementation, after determining the minimum error plane between the first line L2 and the second line L1, the intersection line L0 between the minimum error plane and the horizontal plane (XZ plane) may be determined, and a vertical line C0 of the intersection line L0 located in the horizontal plane may be used as the moving direction of the target object.

As above, the first line, the second line, and the minimum error plane between the first line and the second line are determined only using the 3D keypoint information, and then the moving direction of the target object is determined using the intersection line between the minimum error plane and the horizontal plane. The moving direction is not determined based on device parameters of the capturing device, thus the gait analysis and recognition are not based on the device parameters of the capturing device, which overcomes the defects of strong dependence on other data or devices and poor generalization ability in the gait analysis and recognition.

In some embodiments, determining, based on the plurality of 3D keypoint information, the moving direction of the target object, may include:

determining, based on the plurality of 3D keypoint information, a third line connected between the left hip and the right hip of the target object, a fourth line connected between the left shoulder and the right shoulder of the target object, and a fifth line connected between a pelvic point and a cervical point of the target object; determining a first torso direction of the target object relative to the horizontal plane based on the third line and the fourth line; determining a second torso direction of the target object relative to a vertical plane based on the fifth line; and determining the moving direction of the target object based on the first torso direction and the second torso direction.

The 3D keypoint information used to determine the third line, the fourth line, and the fifth line is the information in the physical scale space.

In an implementation, a direction of a bisector of an angle formed between the third line and the fourth line may be used as a left-right direction of the target object, that is, the first torso direction, and a direction of the fifth line may be used as an up-down direction of the target object, that is, the second torso direction. Then, a cross-product of the first torso direction and the second torso direction may be used as the moving direction of the target object.

As above, a plurality of lines are determined only using the 3D keypoint information, then the first torso direction of the target object relative to the horizontal plane and the second torso direction of the target object relative to the vertical plane are determined using the determined lines, and finally the moving direction of the target object is determined using the first torso direction and the second torso direction. The moving direction is not determined based on the device parameters of the capturing device, thus the gait analysis and recognition are not based on the device parameters of the capturing device, which overcomes the defects of strong dependence on other data or devices and poor generalization ability in the gait analysis and recognition.

Based on the above embodiments, the gait data of the target object at multiple consecutive time points may be recognized. After recognizing the gait data of the target object at the multiple consecutive time points, behavior of the target object may be monitored and predicted based on the recognized gait data. In an implementation, the recognized gait data may be used to remotely monitor and predict behavior of children or the elderly with cognitive impairment to ensure the personal safety of the children or the elderly with cognitive impairment.

The present disclosure further provides a center-of-gravity prediction method, which may be applied to a separate terminal device or server that performs center-of-gravity prediction on a target object, or may be applied to the terminal device or server for behavior prediction as described above. As shown in FIG. 5, the center-of-gravity prediction method according to the present disclosure may include steps S510-S530.

At step S510, first center-of-gravity coordinates of the target object are determined based on a plurality of 2D keypoint information of the target object in each frame image of the target video clip, and a plurality of 3D keypoint information of the target object in the target image are determined based on the plurality of 2D keypoint information of the target object in each frame image of the target video clip.

Herein, the determination of the plurality of 3D keypoint information of the target object in the target image based on the plurality of 2D keypoint information of the target object in each frame image of the target video clip is the same as that described in the above embodiments, and will not be repeated herein.

Herein, the first center-of-gravity coordinates may be determined using a trained temporal dilated convolutional neural network. The temporal dilated convolutional neural network herein is different from the temporal dilated convolutional neural network used to determine the 3D keypoint information as described above, and may be retrained.

When determining the first center-of-gravity coordinates using the temporal dilated convolutional neural network, there is no need to normalize the input 2D keypoint information. Similarly, when training this temporal dilated convolutional neural network, there is no need to normalize the sample 2D keypoint information.

At this step, the center-of-gravity coordinates are determined through the trained neural network, which can improve the automation of information processing and determination, and improve the accuracy of information processing and determination.

Since the first center-of-gravity coordinates determined by the temporal dilated convolutional neural network are more accurate in a depth direction (Z-direction), only the coordinate of the first center-of-gravity coordinates in the depth direction may be used when determining the target center-of-gravity coordinates based on the first center-of-gravity coordinates.

At step S520, second center-of-gravity coordinates of the target object are determined based on a plurality of 2D keypoint information of the target object in the target image and the plurality of 3D keypoint information.

Herein, the second center-of-gravity coordinates may be determined by using, for example, SolvePnP algorithm or similar optimization methods based on the 2D keypoint information and the 3D keypoint information. Since the second center-of-gravity coordinates determined by the above algorithm are more accurate in a horizontal direction (X-direction) and a vertical direction (Y-direction), only the coordinates of the second center-of-gravity coordinates in the horizontal and vertical directions may be used when determining the target center-of-gravity coordinates based on the second center-of-gravity coordinates.

The above 3D keypoint information is the information in the physical scale space.

At step S530, the target center-of-gravity coordinates of the target object in the target image is determined based on the first center-of-gravity coordinates and the second center-of-gravity coordinates.

Herein, the coordinate of the first center-of-gravity coordinates in the depth direction, and the coordinates of the second center-of-gravity coordinates in the horizontal and vertical directions may be used as the target center-of-gravity coordinates of the target object in the target image.

In this embodiment, the final target center-of-gravity coordinates of the target object can be determined more accurately by using the determined first and second center-of-gravity coordinates in combination.

Based on the above embodiments, target center-of-gravity coordinates of the target object at multiple consecutive time points may be obtained. After obtaining the target center-of-gravity coordinates of the target object at the multiple consecutive time points, a displacement estimation result (movement trajectory) of the target object at the multiple consecutive time points may be determined based on the plurality of obtained target center-of-gravity coordinates.

After determining the displacement estimation result of the target object, the subsequent movement trajectory of the target object may be predicted based on the displacement estimation result. For example, in an implementation, the subsequent movement trajectory of a basketball player may be predicted using the current movement trajectory of that basketball player, so as to develop counter tactics. Alternatively, after a basketball game, a movement trajectory of a basketball player may be analyzed, and used to analyze and summarize tactics of that basketball player, as well as to develop counter tactics, etc.

In addition, after predicting the behavior of the target object by using the gait data of the target object obtained in the above embodiments, and predicting the movement trajectory of the target object by using the target center-of-gravity coordinates of the target object obtained in the above embodiments, the predicted behavior and movement trajectory of the target object may be used in combination to predict whether the next behavior of the target object will be dangerous. For example, by using the currently predicted behavior and movement trajectory of children in combination, behavior feature information of the next behavior of the children may be predicted, and used to determine whether the next behavior of the children will be dangerous, so as to implement a matching safety disposal strategy.

The above neural network for determining the center-of-gravity coordinates of the target object may be used as a second neural network. In an implementation, the second neural network may be trained by the following steps I-V

At step I, a second sample video clip including a second sample image, and a plurality of standard 3D keypoint information of a second sample object in the second sample image are acquired, where the second sample video clip further includes N sample frame images preceding the second sample image.

Herein, the second sample image is an image to be used for determination of the center-of-gravity coordinates. The standard 3D keypoint information may be used as sample labelling information.

In an implementation, the plurality of standard 3D keypoint information of the second sample object in the second sample image may be determined through the neural network. The plurality of standard 3D keypoint information may be, for example, an object skeleton including information of seventeen keypoints, which is information in the physical scale space.

At step II, a plurality of sample 2D keypoint information of the second sample object in each frame image of the second sample video clip is determined based on the plurality of standard 3D keypoint information.

Herein, the sample 2D keypoint information may be obtained by back-projection of the standard 3D keypoint information, which may include, for example:

acquiring device parameter information of a capturing device capturing the second sample video clip, and an RGB picture of each frame image of the second sample video clip; and determining the plurality of sample 2D keypoint information of the second sample object in each frame image of the second sample video clip based on the device parameter information, each RGB picture, and the plurality of standard 3D keypoint information.

The plurality of sample 2D keypoint information is determined based on the plurality of standard 3D keypoint information with back-projection, which can improve the accuracy of the determined sample 2D keypoint information.

In addition, in an implementation, the sample 2D keypoint information may be obtained without the use of back-projection. For example, the 2D keypoint detection network may be directly used to detect the second sample object in each frame image to obtain the plurality of sample 2D keypoint information of the second sample object in each frame image of the second sample video clip.

At step III, standard center-of-gravity coordinates of the second sample object are determined based on the plurality of standard 3D keypoint information.

At step IV, the plurality of sample 2D keypoint information determined is input into the second initial neural network to be trained, and the plurality of input sample 2D keypoint information is processed through the second initial neural network, to output predicted center-of-gravity coordinates of the second sample object in the second sample image.

At step V, network parameters of the second initial neural network are adjusted based on error information between the predicted center-of-gravity coordinates and the standard center-of-gravity coordinates, and the second neural network is obtained after the training is completed.

The plurality of standard 3D keypoint information in the above step I is information in the physical scale space. After acquiring the standard 3D keypoint information in the physical scale space, the standard center-of-gravity coordinates in the physical scale space may be determined directly by using the standard 3D keypoint information in the physical scale space, and the network parameters of the second initial neural network may be adjusted by using the error information between the predicted center-of-gravity coordinates and the standard center-of-gravity coordinates in the physical scale space. In this way, the center-of-gravity coordinates directly predicted by the trained second neural network when in use are the information in the physical scale space.

In some embodiments, the first neural network may include a temporal dilated convolutional neural network. Neurons that are not used to determine the 3D keypoint information in the target image may be removed from the first neural network.

Using the temporal dilated convolutional neural network to determine the 3D keypoint information can overcome an ill-posed problem that may occur when converting from the 2D keypoint information into the 3D keypoint information in single frame image detection. Moreover, in this embodiment, the temporal dilated convolutional neural network is simplified by removing the neurons that are not used to determine the 3D keypoint information in the target image, which can overcome the defects of time-consuming and poor real-time when converting from the 2D keypoint information into the 3D keypoint information, and can improve the efficiency of the gait analysis and recognition. The simplified temporal dilated convolutional neural network in the present disclosure may complete the conversion from the 2D keypoint information into the 3D keypoint information within 10 milliseconds for each frame image of 720p on a home computer.

In addition, the second neural network may include a temporal dilated convolutional neural network. Neurons that are not used to determine the center-of-gravity coordinates in the target image may be removed from the second neural network.

The temporal dilated convolutional neural network is simplified by removing the neurons that are not used to determine the center-of-gravity coordinates in the target image, which can overcome the defects of time-consuming and poor real-time when determining the center-of-gravity coordinates.

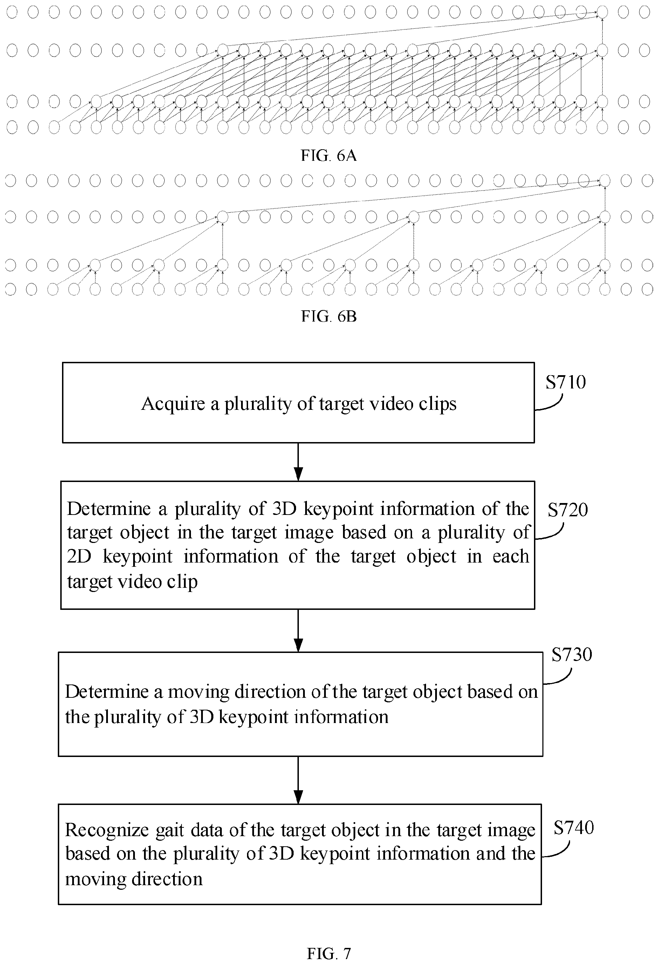

In addition, it is also possible to not remove the neurons in the first neural network and the second neural network, but only utilize the neurons therein used to determine the 3D keypoint information and the center-of-gravity coordinates for data processing, without using other neurons. The temporal dilated convolutional neural network as shown in FIG. 6A utilizes all neurons to determine the 3D keypoint information, and the temporal dilated convolutional neural network as shown in FIG. 6B only utilizes the neurons used to determining the 3D keypoint information in the target image to determine the 3D keypoint information.

An embodiment of the present disclosure further provides a gait recognition method, which is applied to a terminal device or server that performs gait recognition on a target object. As shown in FIG. 7, the gait recognition method according to the embodiment of the present disclosure includes steps S710-S740.

At step S710, a plurality of target video clips are acquired, and each of the target video clips includes a target image and N frame images preceding the target image, where N is a positive integer.

Herein, the target image, which may be the last frame image in the target video clip, is an image to be used for gait recognition. With this embodiment, gait data of the target object in the target image may be determined.

The target video clip may be captured by the terminal device that performs the gait recognition using its own capturing device such as a camera, or may be captured by other capturing devices and then transmitted to the terminal device or server that performs the gait recognition.

N may be flexibly set based on specific application scenarios, and may be 27, for example.

At step S720, a plurality of 3D keypoint information of the target object in the target image is determined based on a plurality of 2D keypoint information of the target object in each target video clip.

Prior to step S720, a plurality of 2D keypoint information of the target object in each frame image of the target video clip may be firstly determined. In an implementation, a 2D keypoint detection network may be used to detect each frame image to determine the plurality of 2D keypoint information in each frame image.

After the plurality of 2D keypoint information of the target object in each frame image is determined, the plurality of 3D keypoint information of the target object in the target image may be determined by using a temporal dilated convolutional neural network based on the plurality of determined 2D keypoint information, for example.

The 3D keypoint information of the target object in the target image, i.e., in the last frame image of the target video clip, is determined by using the plurality of 2D keypoint information of the target object in each frame image of the target video clip, which can avoid an ill-posed problem that may occur when determining the 3D keypoint information by using 2D keypoint information of a single frame image, and can achieve better temporal coherence and stability of the predicted 3D keypoint information, and thus the success rate and accuracy rate of gait analysis and recognition based on the 3D keypoint information can be improved.

At step S730, a moving direction of the target object is determined based on the plurality of 3D keypoint information.

In some embodiments, the moving direction of the target object may be determined by using those of the 3D keypoint information corresponding to hips, shoulders, pelvis, cervical vertebra, and the like of the target object, without dependence on device parameters of a capturing device capturing the target video clip.

The moving direction is a moving direction of the target object in a physical scale space. The 3D keypoint information may be information of the target object both in a network scale space and in the physical scale space. If the 3D keypoint information is the information of the target object in the network scale space, the 3D keypoint information in the network scale space may be firstly converted into the information in the physical scale space.

The physical scale space may have the physical scale in the real world, and the unit may be the standard unit of length "meter" in the International System of Units. The network scale space may have an artificially defined arithmetic scale in the unit of 1, which aims to eliminate an influence of the object's own size on relevant calculations and simplify the calculations. The two scales have different dimensions.

At step S740, gait data of the target object in the target image is recognized based on the plurality of 3D keypoint information and the moving direction.

In some embodiments, in the case that the plurality of 3D keypoint information is 3D keypoint information in the network scale space, before determining the moving direction of the target object based on the plurality of 3D keypoint information, the gait recognition method may further include: acquiring physical size information of the target object; and updating the 3D keypoint information in the network scale space to 3D keypoint information in the physical scale space based on the physical size information of the target object.

Implementation schemes of the plurality of 3D keypoint information, the moving direction of the target object, the gait data, etc. in the gait recognition method embodiment are the same as respective implementation schemes in the above behavior prediction method embodiment, and the technical effects achieved are also the same, which will not be repeated herein.

Corresponding to the above behavior prediction method, the present disclosure further provides a behavior prediction apparatus, which is applied to a terminal device or server that performs behavior prediction. Each module may implement the same method steps and achieve the same beneficial effects as in the above method, thus the same parts will not be repeated in the present disclosure.

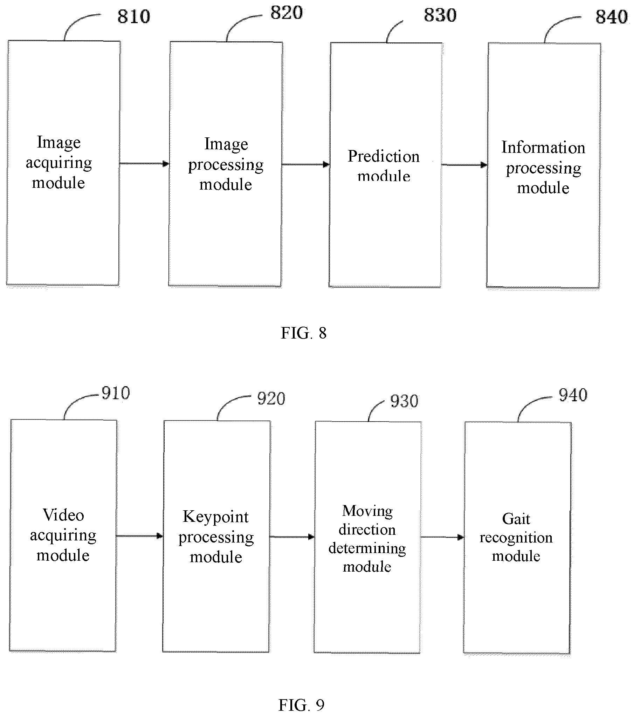

As shown in FIG. 8, a behavior prediction apparatus according to the present disclosure may include an image acquiring module 810, an image processing module 820, a prediction module 830, and an information processing module 840.

The image acquiring module 810 is configured to acquire a plurality of target video clips, each of which includes a target image and N frame images preceding the target image, where N is a positive integer.

The image processing module 820 is configured to determine gait data and target center-of-gravity coordinates of a target object in the target image based on a plurality of 2D keypoint information of the target object in each target video clip.

The prediction module 830 is configured to predict behavior feature information of the target object within a predetermined period of time based on the gait data and the target center-of-gravity coordinates.

The information processing module 840 is configured to determine, based on the behavior feature information, safety feature information of the target object within the predetermined period of time and a safety disposal strategy matching the safety feature information.

Corresponding to the above gait recognition method, the present disclosure further provides a gait recognition apparatus, which is applied to a terminal device or server that performs gait recognition. Each module may implement the same method steps and achieve the same beneficial effects as in the above method, thus the same parts will not be repeated in the present disclosure.

As shown in FIG. 9, a gait recognition apparatus according to the present disclosure may include a video acquiring module 910, a keypoint processing module 920, a moving direction determining module 930, and a gait recognition module 940.

The video acquiring module 910 is configured to acquire a plurality of target video clips, each of which includes a target image and N frame images preceding the target image, where N is a positive integer.

The keypoint processing module 920 is configured to determine a plurality of 3D keypoint information of a target object in the target image based on a plurality of 2D keypoint information of the target object in each target video clip.

The moving direction determining module 930 is configured to determine a moving direction of the target object based on the plurality of 3D keypoint information.

The gait recognition module 940 is configured to recognize gait data of the target object in the target image based on the plurality of 3D keypoint information and the moving direction.

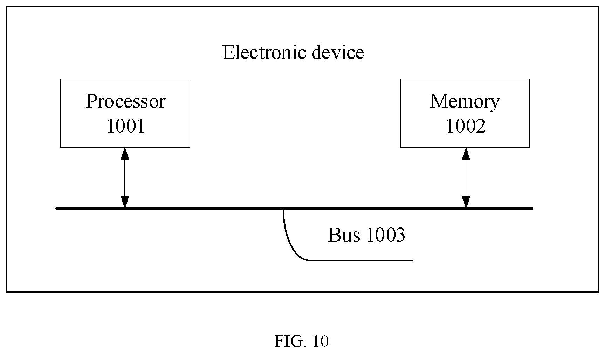

An embodiment of the present disclosure provides an electronic device. As shown in FIG. 10, the electronic device includes a processor 1001, a memory 1002, and a bus 1003. The memory 1002 is configured to store machine-readable instructions executable by the processor 1001. When the electronic device is running, the processor 1001 communicates with the memory 1002 via the bus 1003.

The machine-readable instructions, when executed by the processor 1001, cause the processor 1001 to perform the following behavior prediction method including:

acquiring a plurality of target video clips, each of which includes a target image and N frame images preceding the target image, where N is a positive integer;

determining gait data and target center-of-gravity coordinates of a target object in the target image based on a plurality of 2D keypoint information of the target object in each target video clip;

predicting behavior feature information of the target object within a predetermined period of time based on the gait data and the target center-of-gravity coordinates; and

determining, based on the behavior feature information, safety feature information of the target object within the predetermined period of time and a safety disposal strategy matching the safety feature information.

Alternatively, the machine-readable instructions, when executed by the processor 1001, cause the processor 1001 to perform the following gait recognition method including:

acquiring a plurality of target video clips, each of which includes a target image and N frame images preceding the target image, where N is a positive integer;

determining a plurality of 3D keypoint information of a target object in the target image based on a plurality of 2D keypoint information of the target object in each target video clip;

determining a moving direction of the target object based on the plurality of 3D keypoint information; and

recognizing gait data of the target object in the target image based on the plurality of 3D keypoint information and the moving direction.

In addition, the machine-readable instructions, when executed by the processor 1001, may cause the processor 1001 to perform the method elements in any of the embodiments described in the above method section, which will not be repeated herein.

An embodiment of the present disclosure further provides a computer program product corresponding to the above method and apparatus, including a computer-readable storage medium storing program codes. The program codes include instructions which may be configured to perform the method in the foregoing method embodiment. The specific implementation may be found in the method embodiment, and will not be repeated herein.

The above description of various embodiments tends to emphasize the differences between the various embodiments, in which the same or similar parts may be cross-referenced, and will not be repeated herein for the sake of conciseness.

Those skilled in the art may clearly understand that, for convenience and conciseness of description, specific operation processes of the apparatus described above may refer to the corresponding processes in the method embodiment, which will not be repeated in the present disclosure. In several embodiments provided by the present disclosure, it should be understood that the disclosed apparatuses and methods may be implemented in other ways. The apparatus embodiments described above are merely schematic. For example, the division of the modules is merely a logical function division, and there may be another division mode in actual implementation. For another example, multiple modules or components may be combined or integrated into another system, or some features may be ignored or not executed. On the other hand, the mutual coupling or direct coupling or communication connection shown or discussed may be through some communication interfaces, and indirect coupling or communication connection between apparatuses or modules may be electrical, mechanical or in other forms.

The modules illustrated as separate components may or may not be physically separated, and the components shown as modules may or may not be physical units, that is, may be located in one place or may be distributed over a plurality of network units. Some or all of the units may be selected according to actual needs to achieve the objectives of embodiments of the present disclosure.

In addition, various functional units in various embodiments of the present disclosure may be integrated into one processing unit, or each unit may exist alone physically, or two or more units may be integrated into one unit.

The function, when implemented in the form of a software functional unit and sold or used as a stand-alone product, may be stored in a non-volatile computer-readable storage medium executable by a processor. Based on this understanding, the embodiments of the present disclosure, in essence, or all or part of the embodiments of the present disclosure may be embodied in the form of a computer software product stored in a storage medium, including a number of instructions to cause a computer device (which may be a personal computer, a server, or a network device, etc.) to perform all or some of the steps of the method described in the various embodiments of the present disclosure. The aforementioned storage medium may include USB flash disk, mobile hard disk, ROM (Read-Only Memory), RAM (Random Access Memory), magnetic disk or optical disk, and other media that may store program codes.

The above are merely the specific embodiments of the present disclosure, but the protection scope of the present disclosure is not limited thereto. Any variation or substitution that may be readily conceived of by those skilled in the art within the technical scope of the present disclosure shall be covered by the protection scope of the present disclosure. Therefore, the protection scope of the present disclosure shall be subject to the protection scope of the claims.

**Claims**

1. A behavior prediction method, comprising:

   acquiring a plurality of target video clips, each of which comprises a target image and N frame images preceding the target image, wherein N is a positive integer;
   for each of the plurality of target video clips, determining gait data and target center-of-gravity coordinates of a target object in the target image based on a plurality of two-dimensional keypoint information of the target object in the target video clip; and
   predicting behavior feature information of the target object within a predetermined period of time based on the gait data and the target center-of-gravity coordinates of the target object for the plurality of target video clips.

2. The method of claim 1, further comprising:
   determining, based on the behavior feature information, safety feature information of the target object within the predetermined period of time and a safety disposal strategy matching the safety feature information.

3. The method of claim 1, wherein determining the gait data of the target object in the target image based on the plurality of two-dimensional keypoint information of the target object in the target video clip, comprises:

   determining a plurality of three-dimensional keypoint information of the target object in the target image based on a plurality of two-dimensional keypoint information of the target object in each frame image of the target video clip;
   determining, based on the plurality of three-dimensional keypoint information, a moving direction of the target object; and
   recognizing, based on the plurality of three-dimensional keypoint information and the moving direction, the gait data of the target object in the target image.

4. The method of claim 1, wherein determining the target center-of-gravity coordinates of the target object in the target image based on the plurality of two-dimensional keypoint information of the target object in the target video clip, comprises:

   determining first center-of-gravity coordinates of the target object and a plurality of three-dimensional keypoint information of the target object in the target image based on a plurality of two-dimensional keypoint information of the target object in each frame image of the target video clip;
   determining second center-of-gravity coordinates of the target object based on a plurality of two-dimensional keypoint information of the target object in the target image and the plurality of three-dimensional keypoint information; and
   determining the target center-of-gravity coordinates of the target object in the target image based on the first center-of-gravity coordinates and the second center-of-gravity coordinates.

5. The method of claim 3 or 4, wherein determining the plurality of three-dimensional keypoint information of the target object in the target image, comprises:

   for each frame image in the target video clip,

      determining a detection box of the target object in the frame image based on a plurality of two-dimensional keypoint information of the target object in the frame image,
      normalizing coordinate information in each of the plurality of two-dimensional keypoint information in the frame image based on size information of the detection box and coordinates of a center point of the detection box to obtain a plurality of target two-dimensional keypoint information of the target object in the frame image; and

   determining the plurality of three-dimensional keypoint information of the target object in the target image based on the plurality of target two-dimensional keypoint information of the target object in each frame image in the target video clip.

6. The method of claim 5, wherein determining the plurality of three-dimensional keypoint information of the target object in the target image based on the plurality of target two-dimensional keypoint information of the target object in each frame image in the target video clip, comprises:

   inputting the plurality of target two-dimensional keypoint information of the target object in the frame image into a trained first neural network; and

processing the plurality of target two-dimensional keypoint information through the trained first neural network, to determine the plurality of three-dimensional keypoint information of the target object in the target image.

7. The method of claim 6, further comprising training a first neural network to obtain the trained first neural network by

acquiring a first sample video clip comprising a first sample image, and acquiring a plurality of standard three-dimensional keypoint information of a first sample object in the first sample image, wherein the first sample video clip further comprises N sample frame images preceding the first sample image;

determining a plurality of sample two-dimensional keypoint information of the first sample object in each frame image of the first sample video clip based on the plurality of standard three-dimensional keypoint information;

inputting the plurality of sample two-dimensional keypoint information of the first sample object into the first initial neural network, and processing the plurality of sample two-dimensional keypoint information through the first initial neural network, to determine a plurality of predicted three-dimensional keypoint information of the first sample object in the first sample image;

adjusting network parameters of the first initial neural network based on error information between the plurality of predicted three-dimensional keypoint information and the plurality of standard three-dimensional keypoint information; and

obtaining the first neural network after the training of the first initial neural network is completed.

8. The method of claim 7, wherein determining the plurality of sample two-dimensional keypoint information of the first sample object in each frame image of the first sample video clip, comprises:

acquiring device parameter information of a capturing device capturing the first sample video clip, and an RGB picture of the frame image of the first sample video clip; and

determining the plurality of sample two-dimensional keypoint information of the first sample object in the frame image of the first sample video clip based on the device parameter information, the RGB picture of the frame image, and the plurality of standard three-dimensional keypoint information.

9. The method of claim 7, wherein adjusting the network parameters of the first initial neural network based on the error information between the plurality of predicted three-dimensional keypoint information and the plurality of standard three-dimensional keypoint information, comprises:

acquiring physical size information of the first sample object;

determining, based on the physical size information of the first sample object, target standard three-dimensional keypoint information for each of the plurality of standard three-dimensional keypoint information in a network scale space; and

adjusting the network parameters of the first initial neural network based on error information between the plurality of predicted three-dimensional keypoint information and a plurality of target standard three-dimensional keypoint information corresponding to the plurality of standard three-dimensional keypoint information.

10. The method of claim 3, wherein determining, based on the plurality of three-dimensional keypoint information, the moving direction of the target object, comprises:

determining, based on the plurality of three-dimensional keypoint information, a first line connected between a left hip and a right hip of the target object, and a second line connected between a left shoulder and a right shoulder of the target object; determining a minimum error plane between the first line and the second line; and determining the moving direction of the target object based on an intersection line between the minimum error plane and a horizontal plane, or

determining, based on the plurality of three-dimensional keypoint information, a third line connected between the left hip and the right hip of the target object, a fourth line connected between the left shoulder and the right shoulder of the target object, and a fifth line connected between a pelvic point and a cervical point of the target object, wherein the third line is the first line and the fourth line is the second line; determining a first torso direction of the target object relative to the horizontal plane based on the third line and the fourth line; determining a second torso direction of the target object relative to a vertical plane based on the fifth line; and determining the moving direction of the target object based on the first torso direction and the second torso direction.

11. The method of claim 3 or 10, wherein

the gait data comprises gait-length information of the target object, and

recognizing, based on the plurality of three-dimensional keypoint information and the moving direction, the gait data of the target object in the target image, comprises: determining, based on the plurality of three-dimensional keypoint information, a first projection of a line connected between two feet of the target object in the moving direction; and determining the gait-length information of the target object based on length information of the first projection, and/or

the gait data comprises gait-width information of the target object, and

recognizing, based on the plurality of three-dimensional keypoint information and the moving direction, the gait data of the target object in the target image, comprises: determining, based on the plurality of three-dimensional keypoint information, a second projection of the line connected between the two feet of the target object in a direction perpendicular to the moving direction; and determining the gait-width information of the target object based on length information of the second projection.

12. The method of claim 4, wherein determining the first center-of-gravity coordinates of the target object based on the plurality of two-dimensional keypoint information of the target object in each frame image of the target video clip, comprises:

inputting the plurality of two-dimensional keypoint information of the target object in each frame image of the target video clip into a trained second neural network; and

processing the plurality of two-dimensional keypoint information through the trained second neural network, to determine the first center-of-gravity coordinates of the target object.

13. The method of claim 12, further comprising training a second neural network to obtain the trained second neural network by

acquiring a second sample video clip comprising a second sample image, and acquiring a plurality of standard three-dimensional keypoint information of a second sample object in the second sample image, wherein the second sample video clip further comprises N sample frame images preceding the second sample image;

determining a plurality of sample two-dimensional keypoint information of the second sample object in each frame image of the second sample video clip based on the plurality of standard three-dimensional keypoint information;

determining standard center-of-gravity coordinates of the second sample object based on the plurality of standard three-dimensional keypoint information;

inputting the plurality of sample two-dimensional keypoint information of the second sample object into the second initial neural network, and processing the plurality of sample two-dimensional keypoint information through the second initial neural network, to output predicted center-of-gravity coordinates of the second sample object in the second sample image;

adjusting network parameters of the second initial neural network based on error information between the predicted center-of-gravity coordinates and the standard center-of-gravity coordinates; and

obtaining the second neural network after the training of the second initial neural network is completed.

14. A gait recognition method, comprising:

acquiring a plurality of target video clips, each of which comprises a target image and N frame images preceding the target image, wherein N is a positive integer;

for each of the plurality of target video clips, determining a plurality of three-dimensional keypoint information of a target object in the target image based on a plurality of two-dimensional keypoint information of the target object in the target video clip;

determining a moving direction of the target object based on the plurality of three-dimensional keypoint information of the target object; and

recognizing gait data of the target object in the target image based on the plurality of three-dimensional keypoint information and the moving direction.

15. The method of claim 14, wherein in the case that the plurality of three-dimensional keypoint information comprises three-dimensional keypoint information in a network scale space, before determining the moving direction of the target object based on the plurality of three-dimensional keypoint information, the method further comprises:

acquiring physical size information of the target object; and

updating the three-dimensional keypoint information in the network scale space to three-dimensional keypoint information in a physical scale space based on the physical size information of the target object.

16. The method of claim 14 or 15, wherein determining the moving direction of the target object based on the plurality of three-dimensional keypoint information, comprises:

determining, based on the plurality of three-dimensional keypoint information, a first line connected between a left hip and a right hip of the target object, and a second line connected between a left shoulder and a right shoulder of the target object; determining a minimum error plane between the first line and the second line; and determining the moving direction of the target object based on an intersection line between the minimum error plane and a horizontal plane, or

determining, based on the plurality of three-dimensional keypoint information, a third line connected between the left hip and the right hip of the target object, a fourth line connected between the left shoulder and the right shoulder of the target object, and a fifth line connected between a pelvic point and a cervical point of the target object; determining a first torso direction of the target object relative to the horizontal plane based on the third line and the fourth line; determining a second torso direction of the target object relative to a vertical plane based on the fifth line; and determining the moving direction of the target object based on the first torso direction and the second torso direction.

17. The method of any one of claims 14 to 16, wherein

the gait data comprises gait-length information of the target object, and
recognizing, based on the plurality of three-dimensional keypoint information and the moving direction, the gait data of the target object in the target image, comprises: determining, based on the plurality of three-dimensional keypoint information, a first projection of a line connected between two feet of the target object in the moving direction; and determining the gait-length information of the target object based on length information of the first projection, and/or
the gait data comprises gait-width information of the target object, and
recognizing, based on the plurality of three-dimensional keypoint information and the moving direction, the gait data of the target object in the target image, comprises: determining, based on the plurality of three-dimensional keypoint information, a second projection of the line connected between the two feet of the target object in a direction perpendicular to the moving direction; and determining the gait-width information of the target object based on length information of the second projection.

18. A gait recognition apparatus, comprising:

a video acquiring module, configured to acquire a plurality of target video clips, each of which comprises a target image and N frame images preceding the target image, wherein N is a positive integer;
a keypoint processing module, configured to determine a plurality of three-dimensional keypoint information of a target object in the target image based on a plurality of two-dimensional keypoint information of the target object in each target video clip;
a moving direction determining module, configured to determine a moving direction of the target object based on the plurality of three-dimensional keypoint information; and
a gait recognition module, configured to recognize gait data of the target object in the target image based on the plurality of three-dimensional keypoint information and the moving direction.

19. A behavior prediction apparatus, comprising:

an image acquiring module, configured to acquire a plurality of target video clips, each of which comprises a target image and N frame images preceding the target image, wherein N is a positive integer;
an image processing module, configured to determine gait data and target center-of-gravity coordinates of a target object in the target image based on a plurality of two-dimensional keypoint information of the target object in each target video clip; and
a prediction module, configured to predict behavior feature information of the target object within a predetermined period of time based on the gait data and the target center-of-gravity coordinates.

20. An electronic device, comprising a processor, a memory, and a bus, wherein the memory is configured to store machine-readable instructions executable by the processor, the processor communicates with the memory via the bus when the electronic device is running, and the processor is configured to execute the machine-readable instructions to perform the behavior prediction method of any one of claims 1 to 13 or the gait recognition method of any one of claims 14 to 17.

21. A computer-readable storage medium in which a computer program is stored, wherein the computer program, when executed by a processor, causes the processor to perform the behavior prediction method of any one of claims 1 to 13 or the gait recognition method of any one of claims 14 to 17.

```
┌─────────────────────────────────────────────────────┐
│        Acquire a plurality of target video clips      │  S110
└─────────────────────────────────────────────────────┘
                          │
                          ▼
┌─────────────────────────────────────────────────────┐
│  Determine gait data and target center-of-gravity     │  S120
│  coordinates of the target object in the target image  │
│  based on a plurality of 2D keypoint information of    │
│  the target object in each target video clip           │
└─────────────────────────────────────────────────────┘
                          │
                          ▼
┌─────────────────────────────────────────────────────┐
│  Predict behavior feature information of the target    │  S130
│  object within a predetermined period of time based   │
│  on the gait data and the target center-of-gravity    │
│  coordinates                                           │
└─────────────────────────────────────────────────────┘
                          │
                          ▼
┌─────────────────────────────────────────────────────┐
│  Determine safety feature information of the target    │  S140
│  object within the predetermined period of time and a │
│  safety disposal strategy matching the safety feature  │
│  information based on the behavior feature information  │
└─────────────────────────────────────────────────────┘
```

FIG. 1

For each frame image in the target video clip, determine a detection box of the target object in the frame image based on a plurality of 2D keypoint information of the target object in the frame image — S210

Normalize coordinate information in each of the 2D keypoint information in the frame image based on size information of the detection box and coordinates of a center point of the detection box to obtain a plurality of target 2D keypoint information of the target object in the frame image — S220

Determine the plurality of 3D keypoint information of the target object in the target image based on the plurality of target 2D keypoint information of the target object in each frame image — S230

FIG. 2

$$m \times \max \left\{ w^d, h^d \right\}$$

31

32

$h^d$

$w^d$

FIG. 3

FIG. 4

| |
|---|
| Determine first center-of-gravity coordinates of the target object and a plurality of 3D keypoint information of the target object in the target image based on the plurality of 2D keypoint information of the target object in each frame image of the target video clip |

S510

| |
|---|
| Determine second center-of-gravity coordinates of the target object based on a plurality of 2D keypoint information of the target object in the target image and the plurality of 3D keypoint information |

S520

| |
|---|
| Determine the target center-of-gravity coordinates of the target object in the target image based on the first center-of-gravity coordinates and the second center-of-gravity coordinates |

S530

FIG. 5

FIG. 6A

FIG. 6B

| Acquire a plurality of target video clips | S710 |

Determine a plurality of 3D keypoint information of the target object in the target image based on a plurality of 2D keypoint information of the target object in each target video clip — S720

Determine a moving direction of the target object based on the plurality of 3D keypoint information — S730

Recognize gait data of the target object in the target image based on the plurality of 3D keypoint information and the moving direction — S740

FIG. 7

810

820

830

840

| Image acquiring module | → | Image processing module | → | Prediction module | → | Information processing module |

FIG. 8

910

920

930

940

| Video acquiring module | → | Keypoint processing module | → | Moving direction determining module | → | Gait recognition module |

FIG. 9

Electronic device

Processor
1001

Memory
1002

Bus 1003

FIG. 10

## INTERNATIONAL SEARCH REPORT

| International application No. |
| --- |
| **PCT/CN2021/077297** |

| A. | CLASSIFICATION OF SUBJECT MATTER |
| --- | --- |

G06K 9/00(2006.01)i

According to International Patent Classification (IPC) or to both national classification and IPC

| B. | FIELDS SEARCHED |
| --- | --- |

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 视频, 行为, 预测, 步态, 重心, 方向, 轨迹, 二维, 三维, 神经网络, 步长, 步宽, video, behavior, action, prediction, gait, center of gravity, direction, tracking, two dimension, three dimension, neural network, step length, stride

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 111291718 A (SHANGHAI SHANGTANG INTELLIGENT TECHNOLOGY CO., LTD.) 16 June 2020 (2020-06-16) claims 1-20, description, paragraphs [0064]-[0226] | 1-21 |
| X | 黄彬 (HUANG, Bin). "智能空间中人的行为识别与理解 (Human Action Recognition and Understanding in Intelligent Space)" 万方学位论文数据库 (WANFANG SCIENCE PERIODICAL DATABASE), 15 February 2011 (2011-02-15), pp. 74-92 | 1, 2, 4-9, 12, 13, 19-21 |
| Y | 黄彬 (HUANG, Bin). "智能空间中人的行为识别与理解 (Human Action Recognition and Understanding in Intelligent Space)" 万方学位论文数据库 (WANFANG SCIENCE PERIODICAL DATABASE), 15 February 2011 (2011-02-15), pp. 74-92 | 3, 10, 11 |
| X | CN 102697508 A (NATIONAL UNIVERSITY OF DEFENSE TECHNOLOGY, PLA.) 03 October 2012 (2012-10-03) description, paragraphs [0053]-[0099], figure 7 | 14-18, 20, 21 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 April 2021** | **17 May 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2021/077297** |

**C.     DOCUMENTS CONSIDERED TO BE RELEVANT**

| Category* | Citation of document, with indication, where appropriate, of the relevant passages | Relevant to claim No. |
|---|---|---|
| Y | CN 102697508 A (NATIONAL UNIVERSITY OF DEFENSE TECHNOLOGY, PLA.) 03 October 2012 (2012-10-03) description, paragraphs [0053]-[0099], figure 7 | 3, 10, 11 |
| A | US 2005267630 A1 (KAJITA SHUUJI et al.) 01 December 2005 (2005-12-01) entire document | 1-21 |

Form PCT/ISA/210 (second sheet) (January 2015)

**INTERNATIONAL SEARCH REPORT**
Information on patent family members

International application No.

**PCT/CN2021/077297**

| Patent document cited in search report | | | Publication date (day/month/year) | Patent family member(s) | | | Publication date (day/month/year) |
|---|---|---|---|---|---|---|---|
| CN | 111291718 | A | 16 June 2020 | None | | | |
| CN | 102697508 | A | 03 October 2012 | CN | 102697508 | B | 16 October 2013 |
| US | 2005267630 | A1 | 01 December 2005 | AU | 2003264470 | A1 | 19 April 2004 |
| | | | | WO | 2004028757 | A1 | 08 April 2004 |
| | | | | JP | 3834629 | B2 | 18 October 2006 |
| | | | | JP | 2004114243 | A | 15 April 2004 |

Form PCT/ISA/210 (patent family annex) (January 2015)

**REFERENCES CITED IN THE DESCRIPTION**

**Patent documents cited in the description**

- CN 202010129936X